(19) Europäisches Patentamt
European Patent Office
Office européen des brevets

(11) **EP 4 466 981 A1**

(12) **EUROPEAN PATENT APPLICATION**
published in accordance with Art. 153(4) EPC

(43) Date of publication:
**27.11.2024 Bulletin 2024/48**

(21) Application number: **23779451.6**

(22) Date of filing: **10.03.2023**

(51) International Patent Classification (IPC):
**A01G 7/00** (2006.01)   **G06Q 50/02** (2024.01)

(52) Cooperative Patent Classification (CPC):
**A01G 7/00; G06Q 50/02**

(86) International application number:
**PCT/JP2023/009330**

(87) International publication number:
**WO 2023/189427 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2022 JP 2022058909**

(71) Applicants:
• **OMRON Corporation
Kyoto 600-8530 (JP)**
• **Organic Nico Co., Ltd.
Kyoto-shi, Kyoto 610-1132 (JP)**

(72) Inventors:
• **HOSOMI, Shinichi
Kyoto-shi, Kyoto 600-8530 (JP)**
• **ZENG, Xiangyu
Kyoto-shi, Kyoto 600-8530 (JP)**
• **MIYAURA, Hiroyuki
Kyoto-shi, Kyoto 600-8530 (JP)**
• **NAKAMURA, Arata
Kyoto-shi, Kyoto 610-1132 (JP)**
• **FUKUDA, Yasuko
Kyoto-shi, Kyoto 610-1132 (JP)**

(74) Representative: **Isarpatent
Patent- und Rechtsanwälte
Barth Hassa Peckmann & Partner mbB
Friedrichstraße 31
80801 München (DE)**

(54) **ASSISTANCE DEVICE, ASSISTANCE METHOD, AND PROGRAM**

(57) An assistance device includes: a first acquisition unit configured to acquire reference data that is data of standard time-series change of a state of a specific crop; a second acquisition unit configured to acquire measurement data obtained by measuring a time-series change in a state of the specific crop cultivated by a user; and a determination unit configured to determine cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

FIG. 1

EP 4 466 981 A1

## Description

TECHNICAL FIELD

The present invention relates to an assistance device, an assistance method, and a program.

BACKGROUND ART

Conventionally, a person who has little experience in cultivation (unskilled person) determines cultivation work using, for example, the number of elapsed days since the day of planting or a season as an index.

On the other hand, Patent Document 1 discloses a technique in which a growth curve in which the horizontal axis indicates the number of elapsed days and the vertical axis indicates an area of a leaf region is used as one index for evaluating a growth state of a fruit.

CITATION LIST

PATENT LITERATURE

Patent Document 1: Japanese Unexamined Patent Publication No. 2018-161058

SUMMARY OF INVENTION

PROBLEMS TO BE SOLVED BY INVENTION

However, in a method of determining the cultivation work according to the number of elapsed days since the day of planting or the season, for example, appropriate cultivation work may not be determined depending on the nutrient of the original soil or the environment of a cultivation area. Furthermore, even if the growth curve is shown to an unskilled person as described in Patent Document 1, the unskilled person cannot determine the cultivation work necessary for bringing the state of the crop close to an ideal state.

Therefore, an object of the present invention is to provide a technique capable of appropriately determining cultivation work to be performed by a user.

MEANS FOR SOLVING THE PROBLEM

In order to achieve the above object, the present invention employs the following configurations.

One aspect of the present invention is an assistance device including: a first acquisition unit configured to acquire reference data that is data of standard time-series change of a state of a specific crop; a second acquisition unit configured to acquire measurement data obtained by measuring a time-series change in a state of the specific crop cultivated by a user; and a determination unit configured to determine cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

According to such a configuration, since the cultivation work can be determined according to the growth of the crop, more appropriate cultivation work can be determined. Therefore, appropriate cultivation work can be determined even if the cultivation work is to be performed by a person who has little experience in cultivation.

One aspect of the present invention is an assistance device including: an acquisition unit configured to acquire reference data that is data of standard time-series change of a state of a specific crop; an estimation unit configured to estimate, as measurement data, a time-series change in a state of the specific crop cultivated by the user based on information about an environment in which the specific crop is cultivated by the user; and a determination unit configured to determine cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

According to such a configuration, even in a case where the state (growth degree) of the crop cannot be measured, the state of the crop can be estimated based on the information about the environment. Therefore, the cultivation work to be performed by the user can be determined without preparing equipment for measuring the state of the crop by the user.

In the assistance device described above, the estimation unit may estimate the measurement data with reference to data in which a relationship between the information about the environment and the state of the specific crop is predetermined. According to this, the state of the specific crop can be easily estimated from the information about the environment.

In the assistance device described above, the state of the specific crop may be at least one of a leaf area, a leaf area index, a height of a stump, the number of leaves, a length of a specific leaf, a width of a specific leaf, the number of buds, the number of flowers, and a number of fruits. For example, if the state of the specific crop is the leaf area or the leaf area index, it is possible to acquire measurement data at the stage when leaves come out of the crop. Therefore, the cultivation work to be performed by the user can be determined from an early stage in the cultivation. Furthermore, the state of the specific crop may include a leaf direction.

In the assistance device described above, the reference data and the measurement data indicate a state of the specific crop corresponding to a number of elapsed days from a reference date, and the determination unit may determine the cultivation work 1) based on an evaluation value obtained by subtracting a change rate of the state in the reference data from a change rate of the state in the measurement data, 2) based on an evaluation value obtained by subtracting a value of the state in the reference data from a value of the state in the measurement data, or 3) based on an evaluation value obtained by subtracting an integrated value of a time-series change of the state in the reference data from an integrated value of a time-series change of the state in the measurement data, for the number of elapsed days corresponding to a specific time point.

In the assistance device described above, the reference date may be a date of planting of the specific crop. This makes it possible to acquire measurement data from the day of planting. Therefore, the cultivation work to be performed by the user can be determined on a day after the planting day.

In the assistance device described above, the determination unit may determine the cultivation work with reference to data in which work according to the evaluation value is determined in advance. According to this, when the evaluation value is determined, the cultivation work to be performed by the user can be uniquely determined.

In the assistance device described above, the determination unit may determine whether or not the specific crop is in a dormant state based on a change rate of the state accompanying a time-series change in the reference data and a change rate of the state accompanying a time-series change in the measurement data. The assistance device described above may further include an output unit configured to output a determination result as to whether or not the specific crop is in a dormant state. Furthermore, the determination unit may determine the cultivation work to be performed by the user regarding cultivation of the specific crop based on whether or not the specific crop is in a dormant state. Furthermore, in a case of determining that the specific crop is in a dormant state, the determination unit may determine cultivation work that controls temperature and illuminance as the cultivation work to be performed by the user regarding the cultivation of the specific crop. According to this, the cultivation work is determined according to whether or not the specific crop is in a dormant state different from general vegetative growth. Therefore, it is possible to determine appropriate cultivation work for the crop that may shift to the dormant state.

The assistance device described above may further include an output control unit configured to control a display or a speaker to notify the user of the cultivation work determined by the determination unit. According to this, the user can easily grasp the work to be performed by the user.

The present invention may be regarded as a device including at least a part of the units described above, or may be regarded as an electronic device, a control system, an information processing system, an information processing device, or an assistance system. Furthermore, the present invention may be regarded as a control method and an assistance method including at least a part of the processing described above. Furthermore, the present invention can also be regarded as a program for realizing such methods and a recording medium (storage medium) in which the program is non-temporarily recorded. Note that each of the units and processing described above can be combined with each other as much as possible to constitute the present invention.

EFFECT OF INVENTION

According to the present invention, it is possible to appropriately determine cultivation work to be performed by a user.

BRIEF DESCRIPTION OF THE DRAWINGS

[Fig. 1] Fig. 1 is a configuration diagram of an assistance system according to a first embodiment.
[Fig. 2] Fig. 2 is an internal configuration diagram of a measurement device and an assistance device according to the first embodiment.
[Fig. 3] Fig. 3A and Fig. 3B are diagrams for explaining measurement data according to the first embodiment.
[Fig. 4] Fig. 4A and Fig. 4B are diagrams for explaining reference data according to the first embodiment.
[Fig. 5] Figs. 5A to 5D are diagrams for explaining determination of additional work according to the first embodiment.
[Fig. 6] Fig. 6 is a flowchart for explaining work determination processing according to the first embodiment.
[Fig. 7] Fig. 7 is an internal configuration diagram of a measurement device and an assistance device according to a second embodiment.
[Fig. 8] Figs. 8A to 8C are diagrams for explaining estimation of measurement data according to the second embodiment.
[Fig. 9] Fig. 9 is a flowchart for explaining work determination processing according to the second embodiment.
[Fig. 10] Figs. 10A to 10D are diagrams for explaining determination of additional work.
[Fig. 11] Fig. 11A and Fig. 11B are diagrams illustrating an assistance device according to a third embodiment.

[Fig. 12] Figs. 12A to 12D are diagrams for explaining detection of a leaf orientation according to a modification.

MODE FOR CARRYING OUT INVENTION

Hereinafter, embodiments for carrying out the present invention will be described with reference to the drawings.

<Application example>

Hereinafter, an assistance device 20 determines cultivation work to be performed by a user on the basis of measurement data indicating a time-series change in a state of a specific crop 40 (for example, strawberry) cultivated by the user and reference data indicating a standard time-series change in a state of the specific crop 40. Specifically, the assistance device 20 determines the cultivation work to be performed by the user according to a difference between a change rate of the state of the specific crop 40 in the measurement data and a change rate of the state of the specific crop 40 in the reference data at a specific time point. Alternatively, the assistance device 20 determines the cultivation work to be performed by the user according to a difference between a value of the state of the specific crop 40 in the measurement data and a value of the state of the specific crop 40 in the reference data. Alternatively, the assistance device 20 determines the cultivation work to be performed by the user according to a difference between an integrated value of a time-series change in the state of the specific crop 40 in the measurement data and an integrated value of a time-series change in the state of the specific crop 40 in the reference data. Note that, hereinafter, the "cultivation work to be performed by the user" refers to cultivation work that the user should perform in addition to cultivation work planned by the user on the premise that the planned cultivation work is performed. However, the "cultivation work to be performed by the user" may be cultivation work including both the cultivation work planned by the user and the cultivation work to be additionally performed by the user in addition to the planned cultivation work.

According to this, the cultivation work to be performed by the user can be determined according to the difference between the measurement value (or the estimation value) according to the growth of the specific crop 40 at the specific time point and the standard value, so that more appropriate cultivation work can be determined at the specific time point.

<First embodiment>

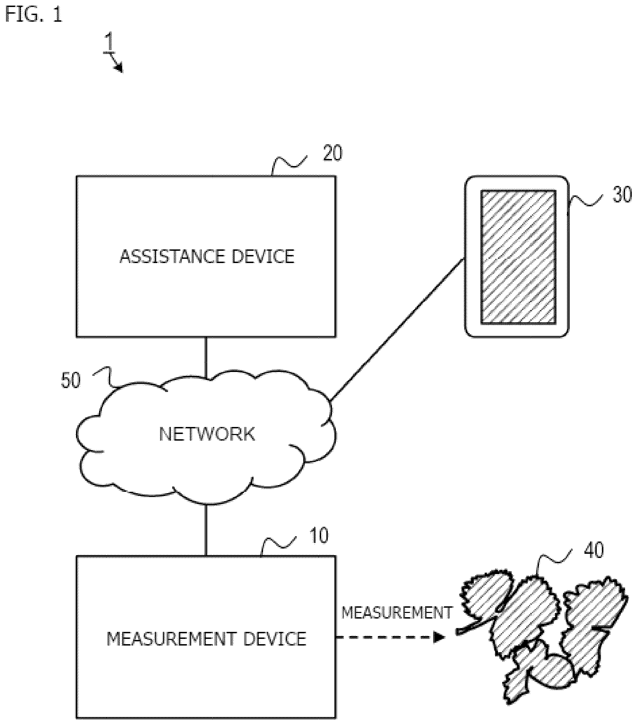

An assistance system 1 that notifies a user of cultivation work (proposes to a user cultivation work) to be performed by the user for a crop 40 will be described with reference to Fig. 1. The assistance system 1 includes a measurement device 10, an assistance device 20, and a user terminal 30. The measurement device 10, the assistance device 20, and the user terminal 30 can communicate with each other via a network 50.

The measurement device 10 acquires information such as a leaf area, a leaf area index (LAI), or the number of fruits of the crop 40 as growth data. In the first embodiment, the crop 40 is assumed to be a strawberry. However, the crop 40 may be any plant (cherry tomato, ginger, asparagus, blueberry, etc.). The leaf area may be an area of a leaf in the entire measurement range, or may be an area of one leaf. The leaf area index is an index that indicates a surface area of the leaves per unit area of the floor. Note that, in the first embodiment, it is assumed that the measurement device 10 acquires information on the leaf area of the crop 40 at the time of measurement as growth data. However, the growth data may be any information as long as the information can be acquired by measuring the crop 40 and is information indicating a state (growth degree) of the crop 40. For example, the growth data may be information indicating at least one of a leaf area, a leaf area index, a height of a stump, the number of leaves, a length of a specific leaf, a width of a specific leaf, the number of buds, the number of flowers, and the number of fruits.

Note that if the growth data is information indicating a leaf area or a leaf area index, the assistance system 1 can acquire the growth data even before the crop 40 bears fruit. Therefore, the assistance system 1 can determine the cultivation work to be performed by the user even before the crop 40 bears fruit. Furthermore, if the growth data is information indicating the leaf area or the leaf area index, the state of the crop 40 which is strawberry can be appropriately grasped from the knowledge (In the ideal growth of strawberry, it is important that new leaves develop and the leaf area continuously increases.) discovered by the inventors.

The assistance device 20 determines the cultivation work to be performed by the user on the basis of the growth data acquired from the measurement device 10. The assistance device 20 transmits information (work information) indicating the determined cultivation work to the user terminal 30. The assistance device 20 is, for example, a server (information processing device) disposed at a position physically away from positions where the measurement device 10 and the user terminal 30 are disposed. Note that the cultivation work includes, for example, irrigating of 1 L (liter)/m$^2$ (pouring water to the crop 40), or additional fertilizing of 1 kg/m$^2$, picking all flowers and fruits other than 3 flowers and fruits remaining in the fruit bunch, and increasing the target temperature setting of the environmental control by 2 degrees.

The user terminal 30 receives the work information from the assistance device 20 and notifies the user of the cultivation work (proposes to the user the cultivation work) indicated by the work information. More specifically, for example, a display unit included in the user terminal 30 displays a display item indicating the cultivation work. Furthermore, a voice output unit included in the user terminal 30 may emit a voice indicating the cultivation work. Therefore, the user terminal 30 may be a display device (display) capable of displaying a display item indicating the cultivation work, or may be a voice output device (speaker) that emits a voice indicating the cultivation work. Furthermore, the user terminal 30 may be a smartphone or a tablet terminal including a display and/or a speaker.

(Internal configuration of measurement device)

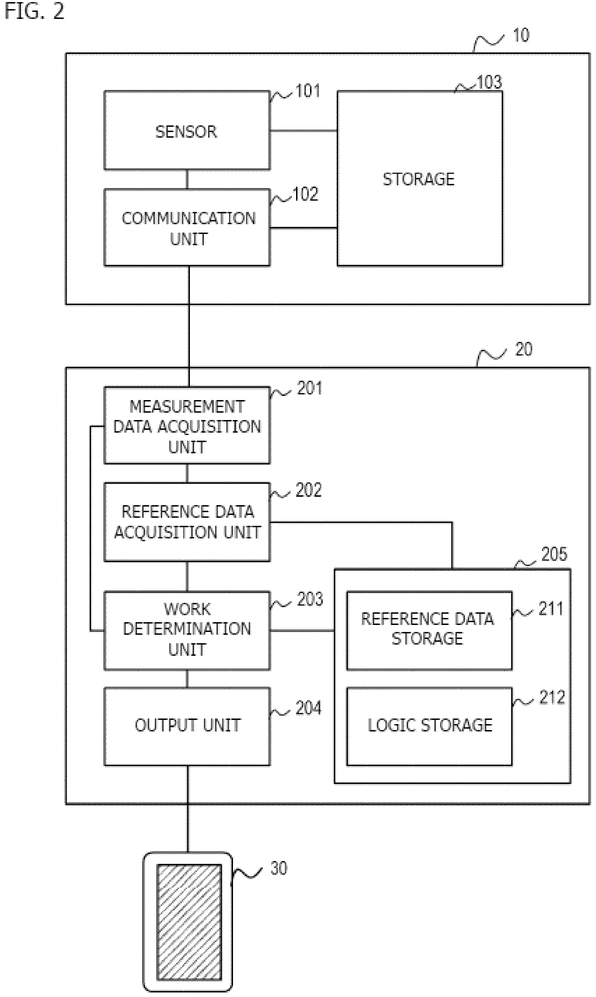

An internal configuration of the measurement device 10 will be described with reference to Fig. 2. The measurement device 10 includes a sensor 101, a communication unit 102, and a storage 103.

The sensor 101 periodically (for example, every day or week) measures the leaf area of the crop 40. For example, the sensor 101 includes an imaging device (camera) that images the crop 40. The sensor 101 images the crop 40 with the imaging device to acquire a captured image. Then, the sensor 101 calculates the area of the leaf shown in the captured image as a leaf area. Note that the leaf area may be the actual area of the leaf, or may be the number of pixels corresponding to the leaf in the captured image. The sensor 101 stores the information of the leaf area in the storage 103 as growth data.

For example, in a case where the number of pixels corresponding to a leaf in the captured image is calculated, the sensor 101 determines whether or not each pixel corresponds to a leaf according to an RGB value of each pixel in the captured image. Furthermore, the sensor 101 may acquire a distance image (an image in which each pixel indicates a distance to a subject) by a distance sensor, and determine a pixel indicating a distance shorter than a predetermined distance in the distance image as a pixel corresponding to a leaf. As a result, the sensor 101 can acquire the number of pixels corresponding to the leaf in the captured image. Furthermore, the sensor 101 can also calculate the actual area of the leaf on the basis of, for example, the number of pixels corresponding to the leaf and the distance from the imaging device to the leaf. Note that any other method may be used to calculate the leaf area.

The communication unit 102 communicates with the assistance device 20. The communication unit 102 transmits the growth data to the assistance device 20 every time the leaf area is measured. Note that communication between the communication unit 102 and the assistance device 20 (a measurement data acquisition unit 201) may be performed in either a wired or wireless manner.

The storage 103 stores the growth data. The storage 103 may store a captured image obtained by imaging the crop 40 by the imaging device included in the sensor 101.

(Internal configuration of assistance device)

An internal configuration of the assistance device 20 will be described with reference to Fig. 2. The assistance device 20 includes a measurement data acquisition unit 201, a reference data acquisition unit 202, a work determination unit 203, an output unit 204, and a storage 205.

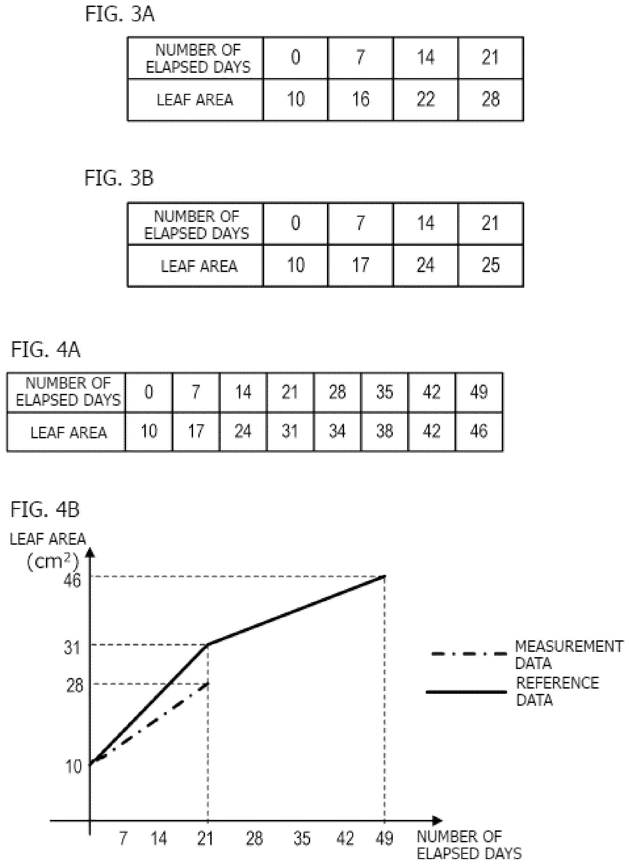

The measurement data acquisition unit 201 acquires growth data from the measurement device 10, and generates (acquires) measurement data obtained by converting the growth data into time-series data. The measurement data is information in which the number of elapsed days from the day on which the crop 40 is planted is associated with the leaf area at the time when the number of elapsed days has elapsed. Fig. 3A and Fig. 3B illustrate measurement data based on growth data obtained by measuring a leaf area every week (7 days) from the day on which the crop 40 was planted. For example, according to Fig. 3A, it can be seen that the leaf area is 10 cm$^2$ on the planting day (the time point at which 0 day has elapsed from the planting day), and the leaf area is 28 cm$^2$ at the time point at which 21 days have elapsed from the planting day.

The reference data acquisition unit 202 acquires reference data stored in the storage 205. Here, the reference data is information indicating a time-series change in a standard (ideal) leaf area of the crop 40 (that is, strawberry). That is, as illustrated in Fig. 4A, the reference data is information in which the number of elapsed days from the day on which the strawberry is planted is associated with the standard leaf area at the time when the number of elapsed days has elapsed. As the reference data, for example, a representative value (average, median, or minimum value) of the leaf area at the elapse of each elapsed day when a plurality of skilled persons (persons who have a lot of experience regarding cultivation) cultivates strawberry is used. The skilled persons are, for example, persons who cultivate strawberries for a predetermined number of years (for example, 10 years) or more. Note that the reference data and the measurement data may be a two-dimensional graph (see Fig. 4B) in which the horizontal axis indicates the number of elapsed days from the planting date and the vertical axis indicates the leaf area.

The work determination unit 203 determines cultivation work (hereinafter, referred to as "additional work") to be performed by the user on the basis of the measurement data and the reference data.

Specifically, first, the work determination unit 203 calculates a value (hereinafter referred to as "evaluation value") obtained by subtracting an average change rate (differential value) of the leaf area corresponding to the number of elapsed days in the reference data from an average change rate (differential value) of the leaf area corresponding to the number of elapsed days from the planting date in the measurement data to the current time. In the first embodiment, the average change rate is a change amount of the leaf area per unit time between the present time point and the previous time point. For example, in a case where 14 days have elapsed from the planting of the crop 40 at the current time, it can be seen from the measurement data illustrated in Fig. 3A that the leaf area at the elapsed days of 14 days is 22 cm$^2$, and the leaf area at the elapsed days of 7 days, which is the previous time, is 16 cm$^2$. Therefore, in a case where the unit time is one day, the average change rate can be calculated to be about 0.85 cm$^2$/day by dividing 6 cm$^2$ (= 22 cm$^2$ - 16 cm$^2$), which is the change amount of the leaf area, by 7 days (= 14 days to 7 days), which is a difference between the elapsed days, as in the following formula. Note that the average change rate may be a change amount of the leaf area per unit time between the present time point and the planting day.

[Mathematical formula 1]

$$\text{Average change rate} \ = \frac{22 - 16}{14 - 7} \approx 0.85$$

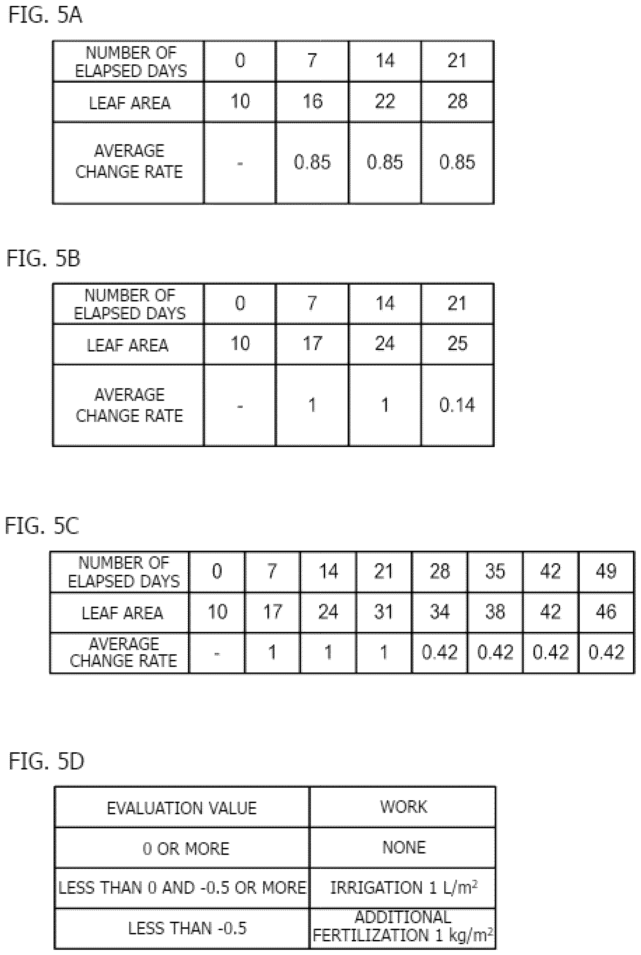

Here, Fig. 5A is information obtained by adding information of an average change rate to the measurement data illustrated in Fig. 3A. Fig. 5B is information obtained by adding information of an average change rate to the measurement data illustrated in Fig. 3B. Fig. 5C is information obtained by adding information of an average change rate to the reference data illustrated in Fig. 4A.

The work determination unit 203 refers to logic data stored in the storage 205 and determines the additional work on the basis of the evaluation value. The logic data is a table indicating a relationship between the evaluation value and the additional work as illustrated in Fig. 5D. Referring to the logic data illustrated in Fig. 5D, the work determination unit 203 determines that the additional work is "none" when the evaluation value is 0 or more. Furthermore, when the evaluation value is less than 0 and -0.5 or more, the work determination unit 203 determines that the additional work is "irrigating only 1 L/m$^2$". Moreover, when the evaluation value is less than -0.5, the work determination unit 203 determines that the additional work is "additional fertilizing of only 1 kg/m$^2$". Note that the logic data may be a function that outputs additional work when the evaluation value is input.

Here, the logic data is generated in advance, for example, in accordance with a relationship between the past cultivation work of a skilled person and the leaf area. For example, it is assumed that the leaf area change rate of the strawberry cultivated by a first skilled person is 1 at a certain time point, whereas the leaf area change rate of the strawberry cultivated by a second skilled person is 0.6 at the same time point. In this case, the cultivation work that is performed by the first skilled person and is not performed by the second skilled person between the certain time point and the previous time point is determined as cultivation work corresponding to the evaluation value of a difference 0.4 (= 1 - 0.6) between the two change rates. Accordingly, one cultivation work corresponding to one evaluation value can be determined. Note that a human may manually generate the logic data with reference to the determined evaluation value and the cultivation work corresponding thereto, or the logic data may be generated by causing a plurality of sets of the evaluation value and the cultivation work corresponding to each other to be used as teacher data and learning the relationship between the evaluation value and the cultivation work by machine learning.

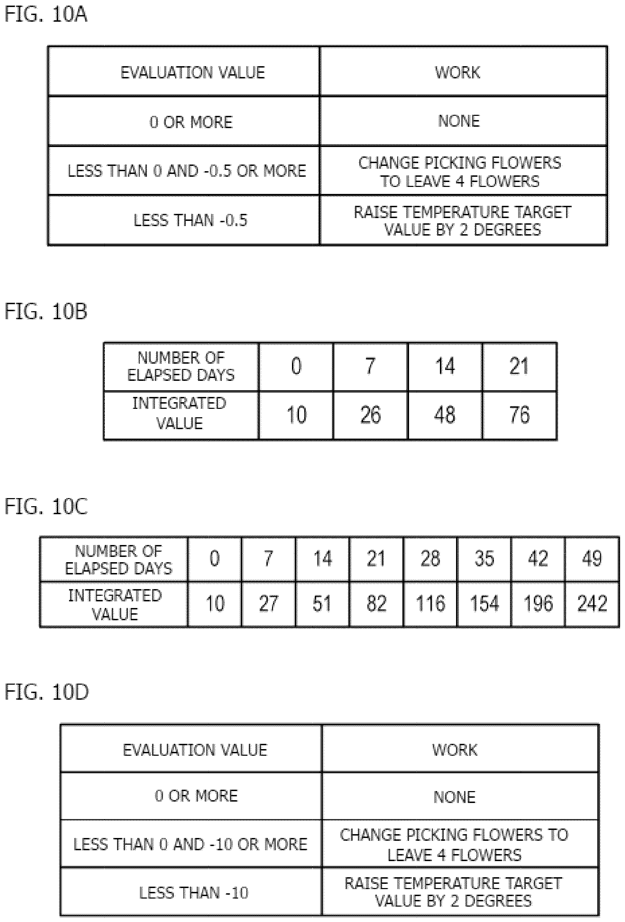

Note that, in the first embodiment, an example in which the work determination unit 203 determines the additional work on the basis of the average change rate as described above will be described. However, the work determination unit 203 may determine the additional work on the basis of a difference between the leaf area in the measurement data and the leaf area in the reference data. Specifically, the work determination unit 203 sets, as the evaluation value, a value obtained by subtracting the leaf area corresponding to the number of elapsed days in the reference data from the leaf area corresponding to the number of elapsed days from the planting date in the measurement data to the current time. Then, the work determination unit 203 determines the additional work with reference to the logic data indicating a relationship between the evaluation value and the cultivation work as illustrated in Fig. 10A.

For example, in a case where 14 days have elapsed from the planting of the crop 40 at the current time, it can be seen from the measurement data illustrated in Fig. 3A that the leaf area at the elapsed days of 14 days is 22 cm$^2$. Then, in a case where 14 days have elapsed from the planting of the crop 40 at the current time, it can be seen from the reference data illustrated in Fig. 4A that the leaf area at the elapsed days of 14 days is 24 cm$^2$. Therefore, the work determination unit 203 can calculate -2 cm$^2$ as the evaluation value by subtracting the leaf area (= 24 cm$^2$) in the reference data from the leaf area (= 22 cm$^2$) in the measurement data. Thereafter, the work determination unit 203 can determine "changing cultivation work so as to leave four flowers when picking flowers" as the additional work on the basis of the evaluation value (= -2 cm$^2$) by referring to the logic data illustrated in Fig. 10A.

As described above, when the additional work is determined on the basis of the difference between the leaf area indicated by the measurement data and the leaf area indicated by the reference data, there is a correlation between the leaf area and the photosynthesis capability of the crop, so that appropriate additional work can be determined in consideration of the photosynthesis capability.

Moreover, the work determination unit 203 may determine the additional work on the basis of a difference between an integrated value (cumulative value) of the time-series change in the leaf area in the measurement data and an integrated value of the time-series change in the leaf area in the reference data. Here, the integrated value is the sum of the leaf area for each predetermined period (for each leaf area measurement interval) from the day of planting to the present time point (specific time point). For example, the work determination unit 203 can calculate, from the measurement data illustrated in Fig. 3A, the number of elapsed days from the planting day and the integrated value of the time-series change of the leaf area as illustrated in Fig. 10B. For example, when the elapsed days are 14 days at the present time, as illustrated in Fig. 3A, the leaf area is 10 cm$^2$ at the elapsed days of 0 days, the leaf area is 16 cm$^2$ at the elapsed days of 7 days, and the leaf area is 22 cm$^2$ at the elapsed days of 14 days. Therefore, the work determination unit 203 can calculate that the integrated value of the leaf area at the time point when the number of elapsed days is 14 days is 48 cm$^2$ (= 10 cm$^2$ + 16 cm$^2$ + 22 cm$^2$). Furthermore, Fig. 10C illustrates a result of calculating the number of elapsed days from the day of planting and the integrated value of the time-series change in the leaf area from the reference data illustrated in Fig. 4A (the integrated value of the time-series change in the leaf area in the reference data).

Then, the work determination unit 203 calculates the evaluation value by subtracting the integrated value of the time-series change in the leaf area in the reference data from the integrated value of the time-series change in the leaf area in the measurement data at the present time point. For example, when 14 days have elapsed from the day of planting, the work determination unit 203 calculates -3 cm$^2$ as the evaluation value by subtracting the integrated value (= 51 cm$^2$) of the time-series change in the leaf area in the reference data from the integrated value (= 48 cm$^2$) of the time-series change in the leaf area in the measurement data. Then, the work determination unit 203 determines the additional work with reference to the logic data indicating a relationship between the evaluation value and the cultivation work as illustrated in Fig. 10D. For example, when the evaluation value is -3 cm$^2$, the work determination unit 203 can determine "changing cultivation work so as to leave four flowers when picking flowers" as the additional work.

As described above, by determining the additional work on the basis of the difference between the integrated value of the time-series change in the leaf area in the measurement data and the integrated value of the time-series change in the leaf area in the reference data, there is a correlation between such an integrated value and a photosynthesis product (flower, fruit, or the like), so that the additional work for appropriately obtaining the photosynthesis product can be determined.

The output unit 204 (output control unit) transmits information indicating the additional work to the user terminal 30. As a result, the output unit 204 controls the user terminal 30 (for example, a display or speaker) to notify the user of the additional work.

The storage 205 includes a reference data storage 211 and a logic storage 212. The reference data storage 211 stores the reference data. The logic storage 212 stores the logic data. Note that the storage 205 may store the growth data, the measurement data generated by the measurement data acquisition unit 201, and/or information indicating the additional work determined by the work determination unit 203.

Furthermore, the measurement device 10 and the assistance device 20 can be configured by, for example, a computer including a CPU (processor), a memory, a storage, and the like. In this case, the configuration illustrated in Fig. 2 is realized by loading a program stored in the storage into the memory and executing the program by the CPU. Such a computer may be a general-purpose computer such as a personal computer, a server computer, a tablet terminal, or a smartphone or may be an embedded computer such as an on-board computer. Alternatively, all or a part of the configuration illustrated in Fig. 2 may be configured by an ASIC, an FPGA, or the like. Alternatively, all or a part of the configuration illustrated in Fig. 2 may be implemented by cloud computing or distributed computing.

(Work determination processing)

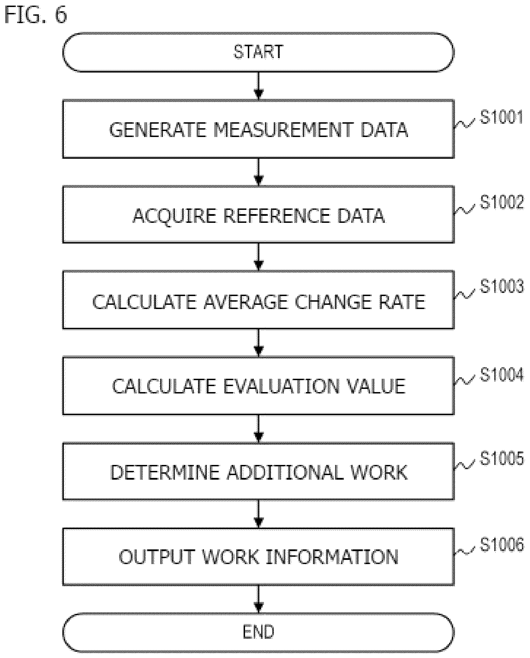

Work determination processing that is processing in which the assistance device 20 determines additional work will be described with reference to a flowchart of Fig. 6. The processing of this flowchart is performed, for example, every time the assistance device 20 acquires the growth data from the measurement device 10.

In step S1001, the measurement data acquisition unit 201 generates measurement data as illustrated in Fig. 3A and Fig. 3B based on the growth data. For example, the measurement data acquisition unit 201 generates new measurement data by adding information (information on elapsed days at the present time point and information on leaf area at the present time point) based on the growth data to the measurement data generated last time.

In step S1002, the reference data acquisition unit 202 acquires reference data from the reference data storage 211. Note that the processing is not limited to being executed in the order of steps S1001 and S1002, and the processing may be executed in the order of steps S1002 and S1001.

In step S1003, the work determination unit 203 calculates an average change rate of the leaf area corresponding to the number of elapsed days until the present time point from each of the measurement data and the reference data. For example, when 21 days have passed since the day of planting at the present time point, the average change rate of the leaf area in the measurement data is calculated to be 0.85 cm$^2$/day from the measurement data illustrated in Fig. 3A (see Fig. 5A). Furthermore, when 21 days have elapsed from the day of planting at the present time point, the average change rate of the leaf area in the reference data is calculated to

be 1 cm$^2$/day from the reference data illustrated in Fig. 4A (see Fig. 5C).

In step S1004, the work determination unit 203 calculates an evaluation value that is a value obtained by subtracting the average change rate of the leaf area of the reference data from the average change rate of the leaf area of the measurement data. For example, when 21 days have elapsed from the day of planting at the present time point, and the measurement data illustrated in Fig. 3A and the reference data illustrated in Fig. 4A are acquired, the work determination unit 203 calculates -0.15 cm$^2$/day (= 0.85 cm$^2$/day -1 cm$^2$/day) as the evaluation value. On the other hand, for example, when 21 days have elapsed from the day of planting at the present time point, and the measurement data illustrated in Fig. 3B and the reference data illustrated in Fig. 4A are acquired, the work determination unit 203 calculates -0.86 cm$^2$/day (= 0.14 cm$^2$/day -1 cm$^2$/day) as the evaluation value.

In step S1005, the work determination unit 203 determines additional work on the basis of the evaluation value and the logic data. Specifically, the work determination unit 203 determines work corresponding to the evaluation value in the logic data represented in the table format as the additional work. For example, when the evaluation value is calculated to be -0.15 cm$^2$/day in step S1004, the work determination unit 203 determines "irrigating only 1 L/m$^2$" as the additional work from the logic data illustrated in Fig. 5D. On the other hand, when the work determination unit 203 has calculated the evaluation value to be -0.86 cm$^2$/day in step S1004, the work determination unit determines "additional fertilizing of only 1 kg/m$^2$" as the additional work from the logic data illustrated in Fig. 5D.

Note that, in the case of determining the additional work according to the difference between the value of the leaf area in the measurement data and the leaf area in the reference data, the work determination unit 203 does not perform the processing of step S1003. Then, in step S1004, the work determination unit 203 calculates an evaluation value that is a value obtained by subtracting the leaf area of the reference data from the leaf area of the measurement data at the present time point. For example, when 21 days have elapsed from the day of planting at the present time point, and the measurement data illustrated in Fig. 3A and the reference data illustrated in Fig. 4A are acquired, the work determination unit 203 calculates -3 cm$^2$ (= 28 cm$^2$ - 31 cm$^2$) as the evaluation value. Thereafter, in step S1005, the work determination unit 203 determines the additional work from the evaluation value with reference to the logic data as illustrated in Fig. 10A. For example, when the evaluation value is -3 cm$^2$, the work determination unit 203 determines "changing cultivation work so as to leave four flowers when picking flowers" as the additional work. Note that for example, when the evaluation value is -10 cm$^2$, the work determination unit 203 determines "raising the target value of the temperature in the cultivation environment by 2 degrees from the current temperature" as the additional work.

Furthermore, in the case of determining the additional work on the basis of the difference between the integrated value of the time-series change in the leaf area in the measurement data and the integrated value of the time-series change in the leaf area in the reference data, the work determination unit 203 calculates each integrated value in step S1003. For example, the work determination unit 203 calculates an integrated value of the time-series change in the leaf area in the measurement data as illustrated in Fig. 10B from the measurement data illustrated in Fig. 3A. The work determination unit 203 calculates an integrated value of the time-series change in the leaf area in the reference data as illustrated in Fig. 10C from the reference data illustrated in Fig. 4A. Then, in step S1004, the work determination unit 203 calculates an evaluation value that is a value obtained by subtracting the integrated value of the time-series change in the leaf area of the reference data from the integrated value of the time-series change in the leaf area of the measurement data at the present time point. For example, when 21 days have elapsed from the day of planting at the present time point, and the measurement data illustrated in Fig. 3A and the reference data illustrated in Fig. 4A are acquired, the work determination unit 203 calculates -6 cm$^2$ (= 76 cm$^2$ - 82 cm$^2$) as the evaluation value. Thereafter, in step S1005, the work determination unit 203 determines the additional work from the evaluation value with reference to the logic data as illustrated in Fig. 10D. For example, when the evaluation value is -6 cm$^2$, the work determination unit 203 determines "changing cultivation work so as to leave four flowers when picking flowers" as the additional work.

In step S1006, the output unit 204 transmits information of the additional work (work information) to the user terminal 30. When acquiring the work information, the user terminal 30 notifies the user of the additional work (proposes to the user the additional work). Therefore, it can be said that the output unit 204 controls the user terminal 30 to notify the user of the additional work. Note that if the measurement device 10 can perform additional fertilization and irrigation, the output unit 204 may output work information to the measurement device 10 to cause the measurement device 10 to execute the additional work.

According to the first embodiment, the assistance system determines the additional work on the basis of the change rate of the state (leaf area) of the crop at the present time point. Therefore, since the additional work can be determined according to the growth rate of the crop at the present time point, more appropriate cultivation work can be determined at the present time point. Therefore, even a person having little experience in cultivation can grasp appropriate cultivation work at appropriate timing.

Note that the above description of the "present time point" may be read as a "specific time point". That is, the assistance system 1 may determine the additional work on the basis of the change rate of the state of the crop at a specific time point slightly before the present time point instead of determining the additional work on the basis of the change rate of the state of the crop at the present time point. This is because a time lag may occur from the measurement of the state of the crop 40 to the determination of the additional work.

<Second embodiment>

In the first embodiment, the assistance system 1 acquires the growth data obtained by measuring the state (growth degree) of the crop 40, and determines the additional work using the measurement data based on the growth data. However, it is also conceivable that the assistance system 1 cannot measure the state (degree of growth) of the crop 40. Therefore, in a second embodiment, a description will be given of an assistance system 1 that determines additional work on the basis of information on a cultivation environment of a crop 40 without measuring a state of the crop 40.

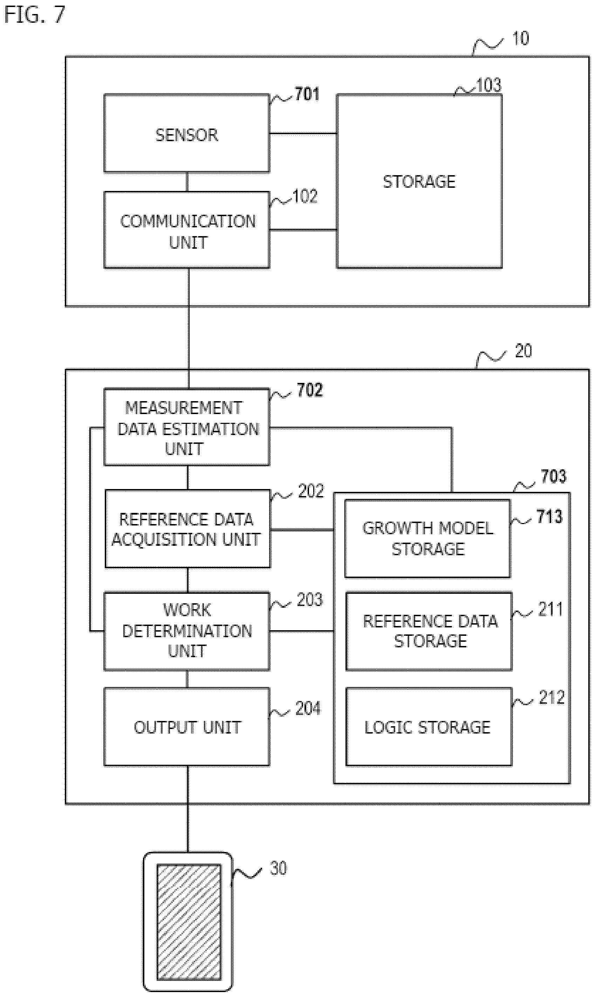

In the second embodiment, the internal configuration of a measurement device 10 and the internal configuration of an assistance device 20 are different from those described in the first embodiment (see Fig. 7). Hereinafter, only differences between the second embodiment and the first embodiment will be described in detail.

The measurement device 10 according to the second embodiment includes a sensor 701 instead of the sensor 101 (see Fig. 7). The sensor 701 acquires information (environment data) on an environment in which the crop 40 is cultivated. For example, the sensor 701 includes a temperature sensor, and the temperature sensor measures a temperature (air temperature) in an environment where the crop 40 is cultivated. Furthermore, the sensor 701 may include a rainfall amount sensor and measure a precipitation amount in an environment where the crop 40 is cultivated by the rainfall amount sensor. Then, the sensor 701 stores information of the measured temperature or precipitation amount in a storage 103 as environmental data. Note that, in the following description, it is assumed that the environment data is information of the Celsius temperature (for example, an average air temperature in 24 hours, an average daytime temperature, or a temperature at 12:00) of a certain day. However, the environment data may be any information as long as it is information on the environment in which the crop 40 is cultivated. For example, the environmental data may be information about humidity (average humidity), illuminance (average illuminance), or the time during which sunlight was hitting the crop 40. Note that the environmental data is preferably information that is known from past knowledge or the like when the environmental data affects (relates to) the growth of the crop 40.

The assistance device 20 according to the second embodiment includes a measurement data estimation unit 702 instead of the measurement data acquisition unit 201 (see Fig. 7). Then, the assistance device 20 includes a storage 703 instead of the storage 205.

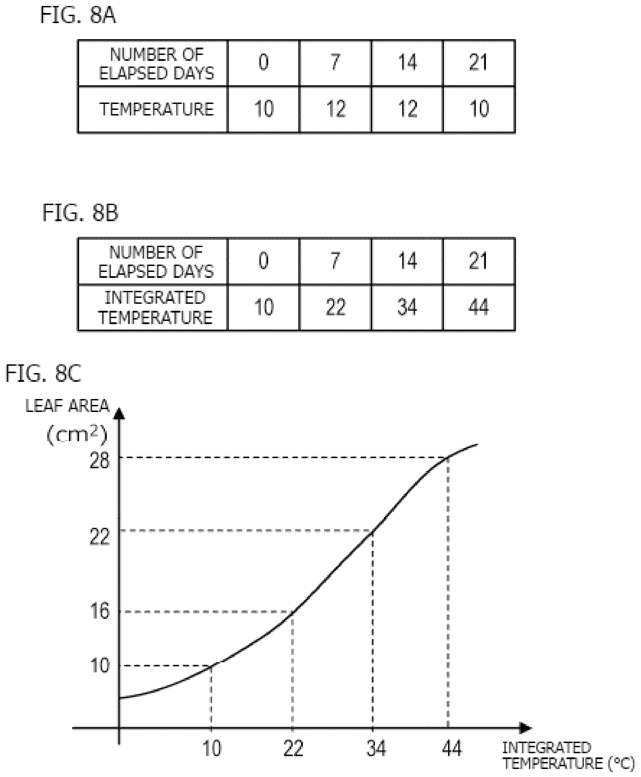

The measurement data estimation unit 702 estimates the measurement data on the basis of the environment data (temperature information) acquired from the measurement device 10. Specifically, first, the measurement data estimation unit 702 generates time-series data (temperature time-series data) indicating a relationship between the number of elapsed days from the day of planting and the temperature as illustrated in Fig. 8A on the basis of the environment data. Then, on the basis of the generated temperature time-series data, the measurement data estimation unit 702 generates time-series data (integrated time-series data) indicating a relationship between the number of elapsed days from the day of planting and the integrated temperature for each week (the sum of temperatures until the elapsed time point of the number of elapsed days) as illustrated in Fig. 8B. In Fig. 8B, for example, in a case where 14 days have elapsed from the day of planting, it can be seen that the integrated temperature is 34 degrees (= 10 degrees + 12 degrees + 12 degrees) from the sum of the temperatures at the elapsed days of 0 day, 7 days, and 14 days.

Thereafter, the measurement data estimation unit 702 refers to a growth model (growth data) as illustrated in Fig. 8C, and estimates the measurement data on the basis of the integrated time-series data. As illustrated in Fig. 8C, the growth model is information indicating a relationship between the integrated temperature and the leaf area for each week. Specifically, the measurement data estimation unit 702 calculates the leaf area corresponding to the integrated temperature indicated by the integrated time-series data with reference to the growth model. As another example, the measurement data estimation unit 702 may calculate a leaf area corresponding to an average value of the temperatures (environmental temperatures) indicated by the time-series data for a certain period with reference to the growth model indicating the relationship between the average temperature for the certain period and the leaf area. Accordingly, the measurement data estimation unit 702 estimates the measurement data by estimating the relationship between the number of elapsed days and the leaf area for each of the number of elapsed days from the planting day.

Specifically, an example in which the measurement data estimation unit 702 estimates the measurement data on the basis of the integrated time-series data illustrated in Fig. 8B and the growth model illustrated in Fig. 8C will be described. In this example, it can be seen that the leaf area corresponding to the integrated temperature (= 10 degrees) in a case where the number of elapsed days is 0 is 10 cm$^2$, and the leaf area corresponding to the integrated temperature (= 22 degrees) in a case where the number of elapsed days is 7 is 16 cm$^2$. Then, it

can be seen that the leaf area corresponding to the integrated temperature (= 34 degrees) in a case where the number of elapsed days is 14 is 22 cm$^2$, and the leaf area corresponding to the integrated temperature (= 44 degrees) in a case where the number of elapsed days is 21 is 28 cm$^2$. From this, the measurement data estimation unit 702 can estimate that the leaf area is 10 cm$^2$ in a case where the number of elapsed days is 0, and the leaf area is 16 cm$^2$ in a case where the number of elapsed days is 7. That is, the measurement data estimation unit 702 can estimate the measurement data as illustrated in Fig. 3A.

Note that the growth model is information created in advance from the relationship between the integrated temperature and the leaf area or the leaf area corresponding to the average temperature for a certain period when a general skilled person cultivates strawberry in advance. Here, the growth model may be information indicating the relationship between the integrated temperature and the leaf area in the year in which the yield of strawberry was the highest in the past 10 years, or the relationship between the average temperature and the leaf area for a certain period. Note that the growth model may be information in a table format or a machine learning model (information that outputs information on the leaf area when information on the integrated temperature is input) as long as the growth model is information indicating the relationship between the integrated temperature or the average temperature for a certain period and the leaf area.

The storage 703 includes a growth model storage 713 together with a reference data storage 211 and a logic storage 212. The growth model storage 713 stores a predetermined growth model.

(Work determination processing)

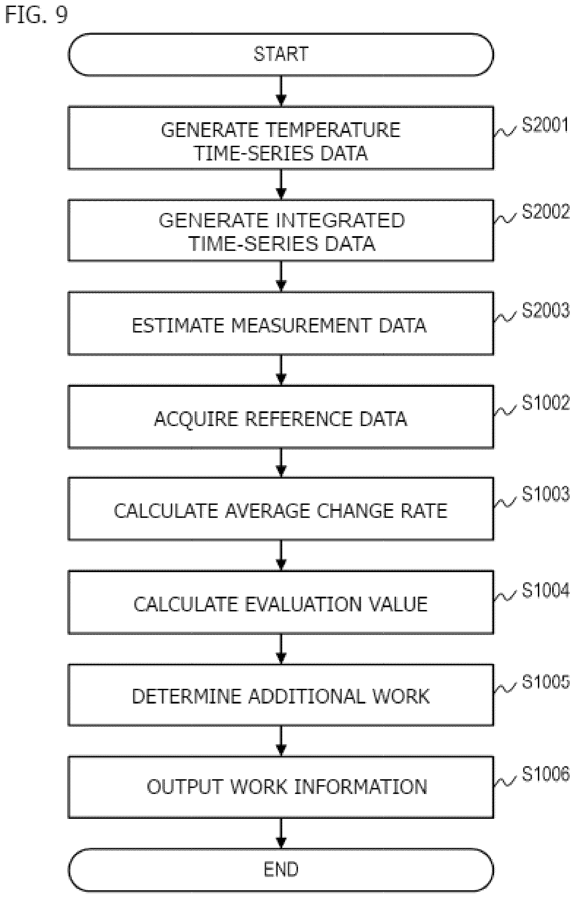

Work determination processing according to the second embodiment will be described with reference to a flowchart of Fig. 9. In Fig. 9, steps denoted by the same symbols as those in Fig. 6 are subjected to the same processing as that in the first embodiment, and thus the description thereof will be omitted. Note that the processing of the flowchart of Fig. 9 starts, for example, every time the measurement data estimation unit 702 acquires the environment data.

In step S2001, the measurement data estimation unit 702 generates temperature time-series data representing a time-series change in temperature as illustrated in Fig. 8A on the basis of the environment data.

In step S2002, the measurement data estimation unit 702 generates, on the basis of the temperature time-series data, integrated time-series data representing a time-series change in the integrated value (integrated temperature) of the temperature as illustrated in Fig. 8B.

In step S2003, the measurement data estimation unit 702 estimates the measurement data from the integrated time-series data with reference to the growth model stored in the growth model storage 713.

According to the second embodiment, even in a case where the state (degree of growth) of the crop 40 cannot be measured, the measurement data (state of the crop 40) can be estimated on the basis of the environment data. Therefore, it is not necessary to acquire the leaf area by analyzing the captured image, so that the configuration of the measurement device 10 can be simplified.

Note that, in the second embodiment, the assistance device 20 estimates the measurement data on the basis of the environment data, but may estimate the measurement data on the basis of, for example, the number of times (or an amount) of fertilization and the number of times (or an amount) of irrigation up to the present time point. In this case, the measurement data is estimated on the basis of the growth model indicating a relationship between the set of the integrated value of the number of times of fertilization and the integrated value of the number of times of irrigation, and the leaf area.

Furthermore, the data estimated by the measurement data estimation unit 702 as described above may be treated as "reference data" instead of the "measurement data". That is, the assistance device 20 may generate the reference data on the basis of the temperature time-series data with reference to the growth model. Then, the measurement data may be acquired according to the growth data as in the first embodiment. According to this, for example, it is possible to generate, from one growth model, the reference data according to a region or season having different cultivation environments without preparing a plurality of reference data in advance according to the region or season having different cultivation environments.

<Third embodiment>

In the first and second embodiments, the assistance device 20 determines the additional work on the basis of the average change rate of the reference data and the average change rate of the measurement data in order to determine the additional work to bring the vegetative growth close to the baseline. On the other hand, in the crop 40 such as strawberry or rose, a period in which growth called "dormancy" is paused occurs. When the dormancy occurs, there is a possibility that a delay in the harvest time of the fruits of the crop 40 or a decrease in the harvest amount occurs.

The dormancy is affected by environmental conditions of the crop 40. In particular, the dormancy is affected by the temperature in the environment in which the crop 40 is cultivated and the brightness of the light (illuminance of the illumination) striking the crop 40. Therefore, in a third embodiment, an assistance device 20 determines whether or not a crop is in a dormant state on the basis of an average change rate of the reference data and an average change rate of the measurement data, and determines work of inhibiting the dormant state on the basis of a determination result.

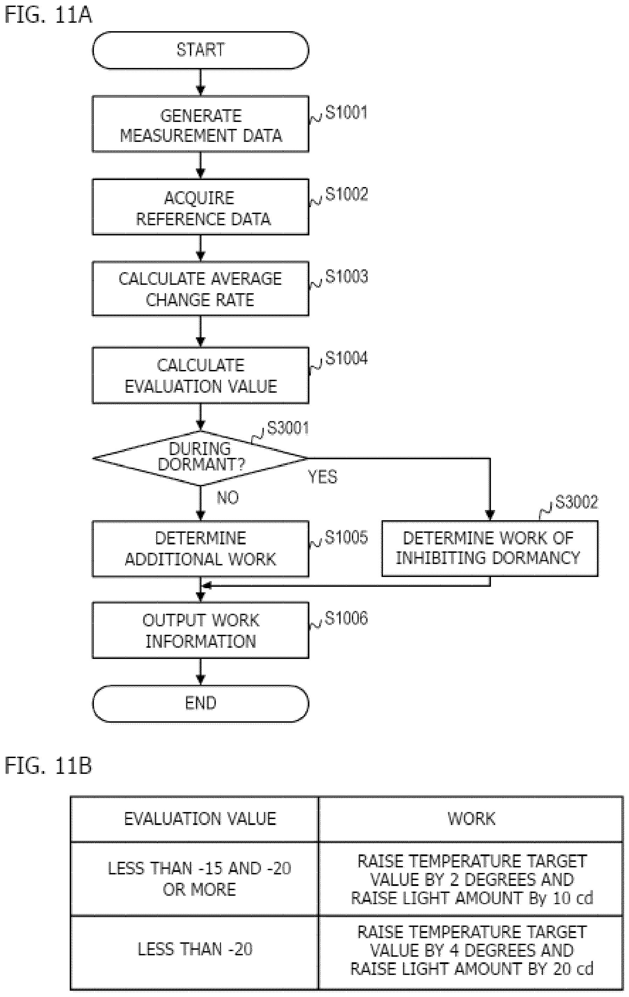

Hereinafter, work determination processing of the assistance device 20 according to the third embodiment will be described with reference to a flowchart illustrated in Fig. 11A. Hereinafter, only a difference between the flowchart illustrated in Fig. 11A and the flowchart illustrated in Fig. 6 will be described. When the evaluation value is calculated in step S1004, the processing of step S3001 starts.

In step S3001, a work determination unit 203 determines whether or not a crop 40 is in a dormant state on the basis of the evaluation value. In a case where it is determined that the crop 40 is in the dormant state, the process proceeds to step S3002. In a case where it is determined that the crop 40 is not in the dormant state, the process proceeds to step S1005. Note that similarly to the first embodiment, a case where the evaluation value is a value obtained by subtracting the average change rate of the leaf area of the reference data from the average change rate of the leaf area of the measurement data will be described. Note that instead of the leaf area, a leaf area index, a height of a stump, the number of leaves, a length of a specific leaf, a width of a specific leaf, the number of buds, the number of flowers, the number of fruits, or a leaf orientation described later may be used.

Here, when the crop 40 is in the dormant state, the evaluation value, which is a value obtained by subtracting the average change rate of the leaf area of the reference data from the average change rate of the leaf area of the measurement data, becomes significantly small. This is because when the crop 40 is in the dormant state, the growth of the crop 40 is stopped, or the growth of the crop 40 is significantly slowed. Therefore, the work determination unit 203 can determine that the crop 40 is in the dormant state in a case where the evaluation value is smaller than a reference value (preset value).

In step S3002, the work determination unit 203 determines work of inhibiting dormancy as additional work on the basis of the evaluation value. For example, the work determination unit 203 determines the additional work from the evaluation value with reference to logic data in which the evaluation value and the work of inhibiting dormancy are associated as illustrated in Fig. 11B. For example, when the evaluation value is -18 cm$^2$, the work determination unit 203 determines "raising the target value of the temperature in the cultivation environment by 2 degrees from the current value, and raising a light amount (illuminance) of a specific light source by 10 cd from the current value" as the additional work. For example, when the evaluation value is -21 cm$^2$, the work determination unit 203 determines "raising the target value of the temperature in the cultivation environment by 4 degrees from the current value, and raising a light amount of a specific light source by 20 cd from the current value" as the additional work.

Note that the reason why the additional work is changed according to the evaluation value in this manner is that work for eliminating the dormant state changes depending on the depth of dormancy. For example, in a shallow dormant state (a state in which the growth of the crop has not completely stopped but has slightly grown; so-called a semi-dormant state) among the dormant states, the dormant state can be resolved by slight adjustment of the temperature and the light amount. On the other hand, in a deep dormant state (a state in which the growth of the crop is completely stopped) among the dormant states, it is necessary to adjust a certain degree of the temperature and the light amount in order to resolve the dormant state.

Furthermore, in step S3002, logic data different from the logic data for determining the additional work in step S1005 is used. That is, different additional work is determined depending on whether or not the crop 40 is in the dormant state. The logic data used in step S3002 is generated in advance, for example, according to a relationship between the past cultivation work of a skilled person and the leaf area.

As described above, according to the third embodiment, in a case where the crop is in the dormant state, work that inhibits the dormant state of the crop is determined as the additional work. Therefore, since the additional work can be determined according to the dormant state of the crop at the present time point, more appropriate cultivation work can be determined at the present time point. Therefore, even a person having little experience in cultivation can grasp appropriate cultivation work at appropriate timing. Then, it is possible to reduce the degree of delay in the actual harvest time or decrease in the harvest amount due to the dormancy of the crop.

Note that as in the third embodiment, the additional work may not be determined depending on whether or not the crop is in the dormant state. Specifically, the additional work is determined as in the first or second embodiment, and an output unit 204 may notify the user of (output to the user) the information on the determination result as to whether the crop is in the dormant state and the additional work. According to this, when the crop is in the dormant state, the user can grasp the additional work necessary for the vegetative growth, and can grasp that the crop is in the dormant state, so that the user can perform work of inhibiting dormancy in addition to the additional work. On the other hand, when the crop is not in the dormant state, the user can grasp the additional work necessary for the vegetative growth, and can grasp that the crop is not in the dormant state. Note that, as in the third embodiment, the additional work that is work of inhibiting the dormant state of the crop may be determined, and the user may be notified of information of the determination result as to whether or not the crop is in the dormant state.

<Modification>

Note that, in the above description, each embodiment has been described assuming that the growth data is information indicating the leaf area. However, a leaf orientation may be used instead of the leaf area. That is, the growth data may be information indicating the orientation of the leaf. When the crop 40 is a plant in which pressure is applied to a root portion of a leaf by the development of the sprouts and an orientation of the leaf changes around a main stem, the orientation of the leaf of the crop 40 changes according to the vegetative growth of the crop 40. Therefore, an amount of change in leaf orientation (= angular velocity of leaf rotation) can be estimated as the degree of vegetative growth of the crop 40.

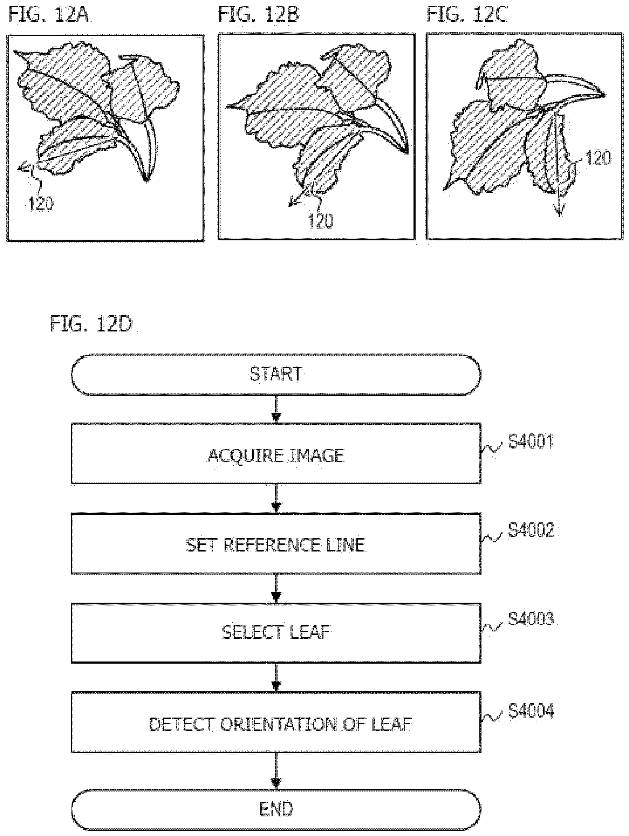

Figs. 12A to 12C are diagrams illustrating examples of a leaf orientation 120 (for example, a direction from a leaf stalk toward a tip of the leaf) arranged in time-series order. As the leaves rotate counterclockwise, the leaf orientation 120 as illustrated in Fig. 12A changes to the leaf orientation 120 as illustrated in Fig. 12B, and over time to the leaf orientation 120 as illustrated in Fig. 12C.

With reference to a flowchart illustrated in Fig. 12D, processing in which the measurement device 10 detects the orientation of the leaf will be described.

In step S4001, the sensor 101 acquires a captured image obtained by imaging the crop 40 by an imaging device.

In step S4002, the sensor 101 sets a reference line in the captured image. The reference line may be a line of ridges, a line of soil, an edge of an elevated bench, or the like. The reference line may be a line (for example, a line extending in a north direction or an east direction) in a specific direction or a specific azimuth that does not appear in the captured image. The reference line may be any line as long as the line does not change due to the growth of the crop 40.

In step S4003, the sensor 101 selects one leaf from the leaves appearing in the captured image. Here, the sensor 101 selects a leaf whose orientation changes according to the growth of the crop 40. Specifically, the sensor 101 selects a leaf (that is, a leaf having a certain size or less) within a certain period after the leaf is developed. This is because when a leaf grows larger than the certain size, the leaf comes into contact with the ground, and the orientation of the leaf may not change.

In step S4004, the sensor 101 detects an orientation of the selected leaf. Specifically, the sensor 101 detects the orientation of the selected leaf according to an inclination of a "line connecting a tip of the selected leaf and a leaf stalk" with respect to the set reference line.

As described above, the sensor 101 detects the orientation of the leaf. As a result, the assistance device 20 can determine the additional work on the basis of the measured average change rate of the leaf orientation (angular velocity of the leaf angle) and the reference average change rate using the leaf orientation instead of the leaf area.

Note that a size of the leaf region in the captured image varies depending on a distance from the imaging device to the leaf. Therefore, in a case where the leaf area is calculated from the captured image, it may be necessary to consider the captured image and the distance between the imaging device and the leaf. On the other hand, in a case where the orientation of the leaf is detected from the captured image, the orientation of the leaf can be detected without depending on the distance between the imaging device and the leaf. Therefore, the leaf orientation can be detected more easily than the leaf area in some cases.

<Other embodiments>

In each of the above embodiments, the assistance device 20 determines the additional work (work to be performed by the user) only according to the difference between the change rate of the leaf area in the measurement data and the change rate of the leaf area in the reference data, but may determine the additional work also on the basis of other information. For example, the assistance device 20 may determine the additional work on the basis of a difference between the actual measurement value of the state of the crop 40 at the present time point (specific time point) and the standard value of the state of the crop 40. For example, logic data is determined in advance so as to indicate a relationship between the difference between the actual measurement value of the state of the crop 40 and the standard value of the state of the crop 40 at the present time point (specific time point), the "evaluation value" of each of the above embodiments, and the additional work. Then, when determining the additional work, the assistance device 20 refers to the logic data and determines the additional work from the difference between the actual measurement value of the state of the crop 40 and the standard value of the state of the crop 40 at the present time point (specific time point) and the "evaluation value" of each of the above embodiments.

In each of the above embodiments, the sensor acquires the growth data or the environmental data by measurement, but a result of manually measuring the leaf area or the temperature by the user may be input to the measurement device 10 or the assistance device 20. That is, as long as the assistance device 20 can acquire the measurement data and the reference data, the process until then is not limited. Furthermore, the "planting day" as the reference day (day 0) of the elapsed days may be read as, for example, "the day on which seeds are planted" or "the day on which the leaf area reaches a predetermined size".

Furthermore, the measurement data and the reference data are information indicating a time-series change in the state of the crop 40, but may be information indicating a change in the state of the crop 40 accompanying a change in the integrated temperature. That is, the measurement data and the reference data may be information such as a growth model illustrated in Fig. 8C. The average change rate may be a ratio of a change amount of the state of the crop 40 to a change amount of the temperature at the present time point.

Note that the interpretation of the description of the claims is not limited only by the matters described in the embodiments. The interpretation of the description of the claims also includes a scope described so that a person skilled in the art can recognize that the problem of the invention can be solved in consideration of the common general technical knowledge at the time of filing.

(Appendix 1)

An assistance device (20) including:

a first acquisition unit (202) configured to acquire reference data that is data of standard time-series change of a state of a specific crop;
a second acquisition unit (201) configured to acquire measurement data obtained by measuring a time-series change in a state of the specific crop cultivated by a user; and
a determination unit (203) configured to determine cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

(Appendix 2)

An assistance device (20) including:

an acquisition unit (202) configured to acquire reference data that is data of standard time-series change of a state of a specific crop;
an estimation unit (702) configured to estimate, as measurement data, a time-series change in a state of the specific crop cultivated by the user based on information about an environment in which the specific crop is cultivated by the user; and
a determination unit (203) configured to determine cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

(Appendix 3)

An assistance method executed by a computer, the assistance method including:

a first acquisition step (S1002) of acquiring reference data that is data of standard time-series change of a state of a specific crop;
a second acquisition step (S1001) of acquiring measurement data obtained by measuring a time-series change in a state of the specific crop cultivated by a user; and
a determination step (S1005) of determining cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

(Appendix 4)

An assistance method executed by a computer, the assistance method including:

an acquisition step (S1002) of acquiring reference data that is data of standard time-series change of a state of a specific crop;
an estimation step (S2003) of estimating, as measurement data, a time-series change in a state of the specific crop cultivated by the user based on information about an environment in which the specific crop is cultivated by the user; and
a determination step (S1005) of determining cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

DESCRIPTION OF SYMBOLS

1: assistance system, 10: measurement device, 20: assistance device, 30: user terminal, 40: crop, 50: network, 101: sensor, 102: communication unit, 103: storage, 201: measurement data acquisition unit, 202: reference data acquisition unit, 203: work determination unit, 204: output unit, 205: storage, 211: reference data storage, 212: logic storage, 701: sensor, 702: measurement data estimation unit, 703: storage, 713: growth model storage

## Claims

1. An assistance device comprising:

   a first acquisition unit configured to acquire reference data that is data of standard time-series change of a state of a specific crop;
   a second acquisition unit configured to acquire measurement data obtained by measuring a time-series change in a state of the specific crop cultivated by a user; and
   a determination unit configured to determine cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

2. An assistance device comprising:

   an acquisition unit configured to acquire reference data that is data of standard time-series change of a state of a specific crop;
   an estimation unit configured to estimate, as measurement data, a time-series change in a state of the specific crop cultivated by the user based on information about an environment in which the specific crop is cultivated by the user; and
   a determination unit configured to determine cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

3. The assistance device according to claim 2, wherein the estimation unit estimates the measurement data with reference to data in which a relationship between the information about the environment and the state of the specific crop is predetermined.

4. The assistance device according to any one of claims 1 to 3, wherein the state of the specific crop includes at least one of a leaf area, a leaf area index, a height of a stump, a number of leaves, a length of a specific leaf, a width of a specific leaf, a number of buds, a number of flowers, and a number of fruits.

5. The assistance device according to any one of claims 1 to 4, wherein the state of the specific crop includes a leaf orientation.

6. The assistance device according to any one of claims 1 to 5, wherein

   the reference data and the measurement data indicate a state of the specific crop corresponding to a number of elapsed days from a reference date, and
   the determination unit determines the cultivation work 1) based on an evaluation value obtained by subtracting a change rate of the state in the reference data from a change rate of the state in the measurement data, 2) based on an evaluation value obtained by subtracting a value of the state in the reference data from a value of the state in the measurement data, or 3) based on an evaluation value obtained by subtracting an integrated value of a time-series change of the state in the reference data from an integrated value of a time-series change of the state in the measurement data, for the number of elapsed days corresponding to a specific time point.

7. The assistance device according to claim 6, wherein the reference date includes a date of planting of the specific crop.

8. The assistance device according to claim 6 or 7, wherein the determination unit determines the cultivation work with reference to data in which work according to the evaluation value is determined in advance.

9. The assistance device according to any one of claims 1 to 8, wherein

   the determination unit further determines whether or not the specific crop is in a dormant state based on a change rate of the state accompanying a time-series change in the reference data and a change rate of the state accompanying a time-series change in the measurement data, and
   the assistance device further comprises an output unit configured to output a determination result as to whether or not the specific crop is in a dormant state.

10. The assistance device according to any one of claims 1 to 8, wherein the determination unit

determines whether or not the specific crop is in a dormant state based on a change rate of the state accompanying a time-series change in the reference data and a change rate of the state accompanying a time-series change in the measurement data, and

determines the cultivation work to be performed by the user regarding cultivation of the specific crop based on whether or not the specific crop is in a dormant state.

11. The assistance device according to claim 10, wherein in a case of determining that the specific crop is in a dormant state, the determination unit determines cultivation work that controls temperature and illuminance as the cultivation work to be performed by the user regarding the cultivation of the specific crop.

12. The assistance device according to any one of claims 1 to 11, further comprising an output control unit configured to control a display or a speaker to notify the user of the cultivation work determined by the determination unit.

13. An assistance method executed by a computer, the assistance method comprising:

a first acquisition step of acquiring reference data that is data of standard time-series change of a state of a specific crop;

a second acquisition step of acquiring measurement data obtained by measuring a time-series change in a state of the specific crop cultivated by a user; and

a determination step of determining cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

14. An assistance method executed by a computer, the assistance method comprising:

an acquisition step of acquiring reference data that is data of standard time-series change of a state of a specific crop;

an estimation step of estimating, as measurement data, a time-series change in a state of the specific crop cultivated by the user based on information about an environment in which the specific crop is cultivated by the user; and

a determination step of determining cultivation work to be performed by the user with respect to cultivation of the specific crop 1) based on a change rate of the state accompanying a time-series change in the reference data and a change rate of the state accompanying a time-series change in the measurement data, 2) based on a value of the state in the reference data and a value of the state in the measurement data, or 3) based on an integrated value of a time-series change of the state in the reference data and an integrated value of a time-series change of the state in the measurement data.

15. A program that causes a computer to execute each step of the assistance method according to claim 13 or 14.

FIG. 1

FIG. 2

FIG. 3A

| NUMBER OF ELAPSED DAYS | 0 | 7 | 14 | 21 |
|---|---|---|---|---|
| LEAF AREA | 10 | 16 | 22 | 28 |

FIG. 3B

| NUMBER OF ELAPSED DAYS | 0 | 7 | 14 | 21 |
|---|---|---|---|---|
| LEAF AREA | 10 | 17 | 24 | 25 |

FIG. 4A

| NUMBER OF ELAPSED DAYS | 0 | 7 | 14 | 21 | 28 | 35 | 42 | 49 |
|---|---|---|---|---|---|---|---|---|
| LEAF AREA | 10 | 17 | 24 | 31 | 34 | 38 | 42 | 46 |

FIG. 4B

FIG. 5A

| NUMBER OF ELAPSED DAYS | 0 | 7 | 14 | 21 |
|---|---|---|---|---|
| LEAF AREA | 10 | 16 | 22 | 28 |
| AVERAGE CHANGE RATE | - | 0.85 | 0.85 | 0.85 |

FIG. 5B

| NUMBER OF ELAPSED DAYS | 0 | 7 | 14 | 21 |
|---|---|---|---|---|
| LEAF AREA | 10 | 17 | 24 | 25 |
| AVERAGE CHANGE RATE | - | 1 | 1 | 0.14 |

FIG. 5C

| NUMBER OF ELAPSED DAYS | 0 | 7 | 14 | 21 | 28 | 35 | 42 | 49 |
|---|---|---|---|---|---|---|---|---|
| LEAF AREA | 10 | 17 | 24 | 31 | 34 | 38 | 42 | 46 |
| AVERAGE CHANGE RATE | - | 1 | 1 | 1 | 0.42 | 0.42 | 0.42 | 0.42 |

FIG. 5D

| EVALUATION VALUE | WORK |
|---|---|
| 0 OR MORE | NONE |
| LESS THAN 0 AND -0.5 OR MORE | IRRIGATION 1 L/m$^2$ |
| LESS THAN -0.5 | ADDITIONAL FERTILIZATION 1 kg/m$^2$ |

FIG. 6

```
                    ┌─────────────────────────────┐
                    │            START            │
                    └─────────────────────────────┘
                                   │
                                   ▼
        ┌───────────────────────────────────────────┐
        │       GENERATE MEASUREMENT DATA           │ ～S1001
        └───────────────────────────────────────────┘
                                   │
                                   ▼
        ┌───────────────────────────────────────────┐
        │          ACQUIRE REFERENCE DATA           │ ～S1002
        └───────────────────────────────────────────┘
                                   │
                                   ▼
        ┌───────────────────────────────────────────┐
        │       CALCULATE AVERAGE CHANGE RATE       │ ～S1003
        └───────────────────────────────────────────┘
                                   │
                                   ▼
        ┌───────────────────────────────────────────┐
        │        CALCULATE EVALUATION VALUE         │ ～S1004
        └───────────────────────────────────────────┘
                                   │
                                   ▼
        ┌───────────────────────────────────────────┐
        │       DETERMINE ADDITIONAL WORK           │ ～S1005
        └───────────────────────────────────────────┘
                                   │
                                   ▼
        ┌───────────────────────────────────────────┐
        │        OUTPUT WORK INFORMATION            │ ～S1006
        └───────────────────────────────────────────┘
                                   │
                                   ▼
                    ┌─────────────────────────────┐
                    │             END             │
                    └─────────────────────────────┘
```

FIG. 7

FIG. 8A

| NUMBER OF ELAPSED DAYS | 0 | 7 | 14 | 21 |
|---|---|---|---|---|
| TEMPERATURE | 10 | 12 | 12 | 10 |

FIG. 8B

| NUMBER OF ELAPSED DAYS | 0 | 7 | 14 | 21 |
|---|---|---|---|---|
| INTEGRATED TEMPERATURE | 10 | 22 | 34 | 44 |

FIG. 8C

FIG. 9

```
              ┌─────────────────────┐
              │        START        │
              └──────────┬──────────┘
                         │
                         ▼
         ┌───────────────────────────────┐
         │    GENERATE TEMPERATURE       │⌇ S2001
         │      TIME-SERIES DATA         │
         └───────────────┬───────────────┘
                         │
                         ▼
         ┌───────────────────────────────┐
         │      GENERATE INTEGRATED      │⌇ S2002
         │       TIME-SERIES DATA        │
         └───────────────┬───────────────┘
                         │
                         ▼
         ┌───────────────────────────────┐
         │    ESTIMATE MEASUREMENT DATA  │⌇ S2003
         └───────────────┬───────────────┘
                         │
                         ▼
         ┌───────────────────────────────┐
         │     ACQUIRE REFERENCE DATA    │⌇ S1002
         └───────────────┬───────────────┘
                         │
                         ▼
         ┌───────────────────────────────┐
         │  CALCULATE AVERAGE CHANGE RATE│⌇ S1003
         └───────────────┬───────────────┘
                         │
                         ▼
         ┌───────────────────────────────┐
         │   CALCULATE EVALUATION VALUE  │⌇ S1004
         └───────────────┬───────────────┘
                         │
                         ▼
         ┌───────────────────────────────┐
         │   DETERMINE ADDITIONAL WORK   │⌇ S1005
         └───────────────┬───────────────┘
                         │
                         ▼
         ┌───────────────────────────────┐
         │    OUTPUT WORK INFORMATION    │⌇ S1006
         └───────────────┬───────────────┘
                         │
                         ▼
              ┌─────────────────────┐
              │         END         │
              └─────────────────────┘
```

FIG. 10A

| EVALUATION VALUE | WORK |
|---|---|
| 0 OR MORE | NONE |
| LESS THAN 0 AND -0.5 OR MORE | CHANGE PICKING FLOWERS TO LEAVE 4 FLOWERS |
| LESS THAN -0.5 | RAISE TEMPERATURE TARGET VALUE BY 2 DEGREES |

FIG. 10B

| NUMBER OF ELAPSED DAYS | 0 | 7 | 14 | 21 |
|---|---|---|---|---|
| INTEGRATED VALUE | 10 | 26 | 48 | 76 |

FIG. 10C

| NUMBER OF ELAPSED DAYS | 0 | 7 | 14 | 21 | 28 | 35 | 42 | 49 |
|---|---|---|---|---|---|---|---|---|
| INTEGRATED VALUE | 10 | 27 | 51 | 82 | 116 | 154 | 196 | 242 |

FIG. 10D

| EVALUATION VALUE | WORK |
|---|---|
| 0 OR MORE | NONE |
| LESS THAN 0 AND -10 OR MORE | CHANGE PICKING FLOWERS TO LEAVE 4 FLOWERS |
| LESS THAN -10 | RAISE TEMPERATURE TARGET VALUE BY 2 DEGREES |

FIG. 11A

```
              ┌─────────────┐
              │    START    │
              └──────┬──────┘
                     ▼
        ┌──────────────────────┐
        │      GENERATE        │ ～ S1001
        │  MEASUREMENT DATA    │
        └──────────┬───────────┘
                   ▼
        ┌──────────────────────┐
        │      ACQUIRE         │ ～ S1002
        │  REFERENCE DATA      │
        └──────────┬───────────┘
                   ▼
        ┌──────────────────────┐
        │  CALCULATE AVERAGE   │ ～ S1003
        │    CHANGE RATE       │
        └──────────┬───────────┘
                   ▼
        ┌──────────────────────┐
        │     CALCULATE        │ ～ S1004
        │  EVALUATION VALUE    │
        └──────────┬───────────┘
                   ▼
                              ～ S3001
                 ◇◇◇◇◇◇◇◇◇
               ◇   DURING    ◇          YES
               ◇  DORMANT?   ◇─────────────────────┐
                 ◇◇◇◇◇◇◇◇◇                         │
                   │ NO                              ▼
                   ▼                      ┌──────────────────────┐ ～ S3002
        ┌──────────────────────┐          │  DETERMINE WORK OF   │
        │     DETERMINE        │ ～ S1005  │ INHIBITING DORMANCY  │
        │  ADDITIONAL WORK     │◄─────────┤                      │
        └──────────┬───────────┘          └──────────────────────┘
                   ▼
        ┌──────────────────────┐
        │    OUTPUT WORK       │ ～ S1006
        │   INFORMATION        │
        └──────────┬───────────┘
                   ▼
              ┌─────────────┐
              │    END      │
              └─────────────┘
```

FIG. 11B

| EVALUATION VALUE | WORK |
|---|---|
| LESS THAN -15 AND -20 OR MORE | RAISE TEMPERATURE TARGET VALUE BY 2 DEGREES AND RAISE LIGHT AMOUNT By 10 cd |
| LESS THAN -20 | RAISE TEMPERATURE TARGET VALUE BY 4 DEGREES AND RAISE LIGHT AMOUNT BY 20 cd |

FIG. 12A

FIG. 12B

FIG. 12C

FIG. 12D

START

ACQUIRE IMAGE — S4001

SET REFERENCE LINE — S4002

SELECT LEAF — S4003

DETECT ORIENTATION OF LEAF — S4004

END

## INTERNATIONAL SEARCH REPORT

| International application No. |
| --- |
| **PCT/JP2023/009330** |

### A. CLASSIFICATION OF SUBJECT MATTER

*A01G 7/00*(2006.01)i; *G06Q 50/02*(2012.01)i
FI:  A01G7/00 603; G06Q50/02

According to International Patent Classification (IPC) or to both national classification and IPC

### B. FIELDS SEARCHED

Minimum documentation searched (classification system followed by classification symbols)

A01G7/00; G06Q50/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2019/208538 A1 (NTT DOCOMO, INC.) 31 October 2019 (2019-10-31) | 1, 12-13, 15 |
|   | paragraphs [0026]-[0076], fig. 1-13 | |
| Y | | 2-8, 12, 14-15 |
| A | | 9-11 |
| Y | JP 11-313594 A (OMRON CORP.) 16 November 1999 (1999-11-16) | 2-8, 12, 14, 15 |
|   | paragraphs [0028], [0029], fig. 4 | |
| A | | 9-11 |
| Y | JP 2013-5725 A (NIKON CORP.) 10 January 2013 (2013-01-10) | 4-8 |
|   | paragraphs [0031], [0032], [0039]-[0057], fig. 3-7 | |
| A | | 9-11 |
| A | JP 2021-106554 A (KUBOTA CORP.) 29 July 2021 (2021-07-29) | 1-15 |
|   | entire text, all drawings | |
| A | JP 2019-170217 A (NATIONAL UNIVERSITY CORPORATION NAGOYA UNIVERSITY) 10 October 2019 (2019-10-10) | 1-15 |
|   | entire text, all drawings | |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **21 April 2023** | **16 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

27

<table>
<tr><td colspan="3" align="center">**INTERNATIONAL SEARCH REPORT**</td><td colspan="2">International application No.<br>**PCT/JP2023/009330**</td></tr>
</table>

| C. | DOCUMENTS CONSIDERED TO BE RELEVANT | | | |
|---|---|---|---|---|
| Category* | Citation of document, with indication, where appropriate, of the relevant passages | | | Relevant to claim No. |
| A | JP 2021-141862 A (OMRON CORP.) 24 September 2021 (2021-09-24)<br>entire text, all drawings | | | 1-15 |
| A | JP 2010-268760 A (DAINIPPON PRINTING CO., LTD.) 02 December 2010 (2010-12-02)<br>entire text, all drawings | | | 1-15 |
| A | JP 2020-156431 A (KISSEI COMTEC CO., LTD.) 01 October 2020 (2020-10-01)<br>entire text, all drawings | | | 1-15 |
| A | US 2021/0378182 A1 (HANGZHOU GLORITY SOFTWARE LTD.) 09 December 2021 (2021-12-09)<br>entire text, all drawings | | | 1-15 |

Form PCT/ISA/210 (second sheet) (January 2015)

INTERNATIONAL SEARCH REPORT
Information on patent family members

International application No.

**PCT/JP2023/009330**

| Patent document cited in search report | | | Publication date (day/month/year) | Patent family member(s) | | | Publication date (day/month/year) |
|---|---|---|---|---|---|---|---|
| WO | 2019/208538 | A1 | 31 October 2019 | (Family: none) | | | |
| JP | 11-313594 | A | 16 November 1999 | (Family: none) | | | |
| JP | 2013-5725 | A | 10 January 2013 | (Family: none) | | | |
| JP | 2021-106554 | A | 29 July 2021 | WO entire text, all drawings | 2021/132276 | A1 | |
| JP | 2019-170217 | A | 10 October 2019 | (Family: none) | | | |
| JP | 2021-141862 | A | 24 September 2021 | EP entire text, all drawings CN | 4099259 115209723 | A1 A | |
| JP | 2010-268760 | A | 02 December 2010 | (Family: none) | | | |
| JP | 2020-156431 | A | 01 October 2020 | (Family: none) | | | |
| US | 2021/0378182 | A1 | 09 December 2021 | CN entire text, all drawings | 113837707 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018161058 A